# EUROPEAN PATENT APPLICATION

(11) **EP 2 008 564 A2**
(43) Date of publication of application: **31.12.2008**
(21) Application number: 08158886.5
(22) Date of filing: 24.06.2008
(51) Int. Cl.: A47L 9/24

(54) **Hose adapter and vacuum cleaner having the same**

(30) Priority: 25.06.2007 KR 20070062035
(71) Applicant: Daewoo Electronics Corporation, Seoul (KR)
(72) Inventor: Lee, Nam Ho, Icheon-si (KR)
(74) Representative: Michalski, Stefan

(57) **Abstract**

A hose adapter and a vacuum cleaner (100) including the same are disclosed. The hose adapter includes a connection pipe (131) inserted into a body of the vacuum cleaner, a receiving part disposed on an outer surface of the connection pipe, a clamp member integrally formed with the receiving part and resiliently fitted into the body of the vacuum cleaner to secure the connection pipe (131), and a resilient member disposed inside the receiving part to support the clamp member.

## Description

### BACKGROUND OF THE INVENTION

### 1. Field of the Invention

The present invention relates to a hose adapter, and more particularly to a hose adapter useful for connection of an extension hose to a body of devices such as vacuum cleaners and the like.

### 2. Description of the Related Art

In general, a vacuum cleaner is configured to generate a strong suction force by driving a motor to collect dust or other foreign matter from the floor or the like.

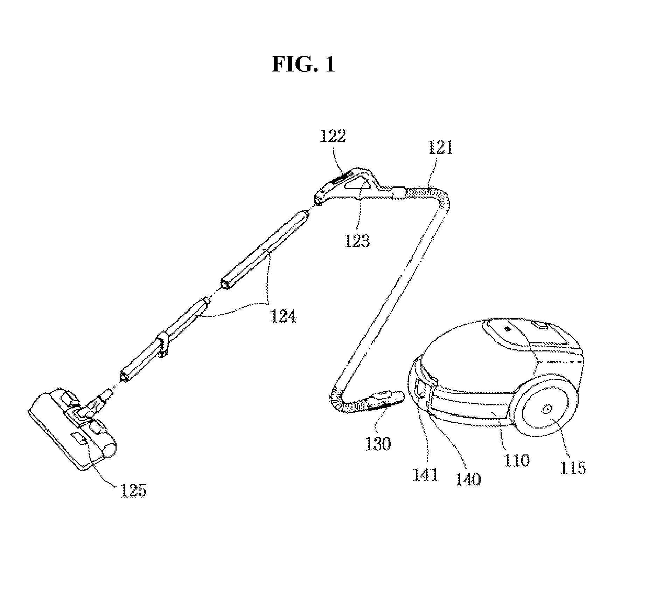

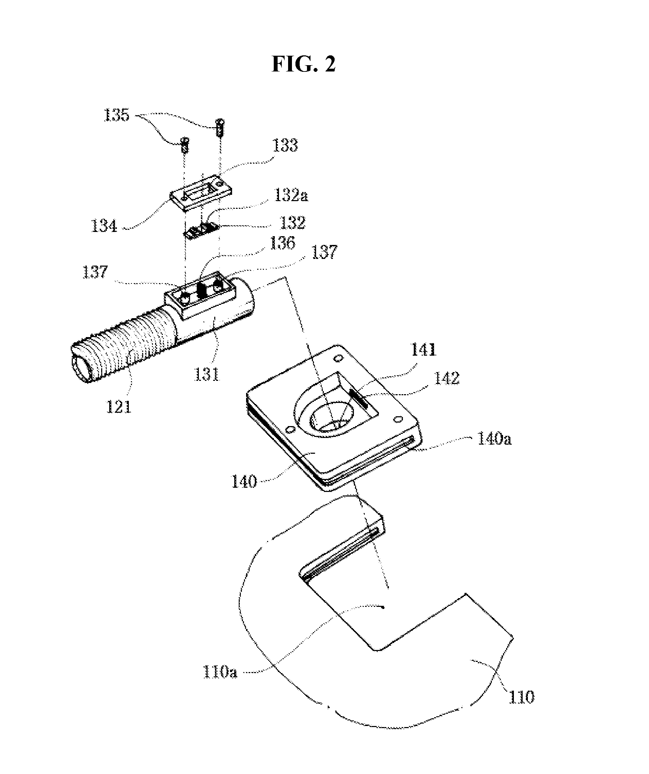

Fig. 1 is a perspective view of a conventional vacuum cleaner, and Fig. 2 is an exploded perspective view of a conventional hose adapter for the vacuum cleaner.

Referring to Fig. 1, the conventional vacuum cleaner 100 includes a body 110 having a dust collection space (not shown) and a drive space (not shown) divided by a partition (not shown) inside the body and capable of being freely moved by means of a wheel 115, a multistage extension pipe 124 connected in series and attached at a leading end to a suction unit 125 capable of drawing in dust from the floor or the like, a handle 123 connected at one end thereof to the pipe 124 and having an intake force adjusting switch 122, and a flexible conduit 121 connected at one end thereof to the other end of the handle 123 to define a flow passage into the body.

The flexible conduit 121 is provided at the other end thereof with a hose adapter 130 that is detachably connected to a socket 140 of the body 110.

Referring to Fig. 2, such a conventional hose adapter 130 includes a connection pipe 131 inserted into a connection hole 141 of the socket 140 to allow the flexible conduit 121 to communicate with the dust collection space, and a latch jaw 132a on an outer surface of the connection pipe 131.

The hose adapter 130 is provided with a button member 132 that is forced upward due to an elastic force of a spring 136 located under the button member 132, and with a button cover 134 secured to a screw boss 137 of the connection pipe 131 by screws for holding the button member 132 in place on the connection pipe 131.

When the connection pipe 131 of the hose adapter 130 is press-fitted into the connection hole 141 of the socket 140 on the body 110, the latch jaw 132a of the button member 132 exposed through an exposing aperture 133 of the button cover 135 is resiliently fitted into a latch groove 142 of the socket 140 by an elastic restoration force of the spring 136.

To detach the hose adapter 130 from the connection hole 141 of the socket 140, the button member 132 is pressed to compress the spring 133. Then, the latch jaw 132a is moved into the button cover 132 and is then released from the latch groove 142a of the socket, whereby the hose adapter 130 can be completely detached from the body 110 by pulling the connection pipe 131.

However, the conventional hose adapter 130 as described above has a complex assembling structure for mounting the spring 133, the button member 132 and the button cover 134 on the connection pipe 131, and comprises a number of components, causing a troublesome assembling operation on an assembly line and an increase in manufacturing costs of the vacuum cleaner.

Therefore, there is a need for an improved hose adapter that overcomes such problems.

### SUMMARY OF THE INVENTION

The present invention is conceived to solve the problems of the conventional techniques as described above, and an aspect of the present invention is to provide a hose adapter that permits convenient detachment and attachment with respect to a body of a device, such as a vacuum cleaner and the like, and has a reduced number of components for easy assembly of the hose adapter and reduction in manufacturing costs of the device using the hose adapter.

In accordance with an aspect of the present invention, a hose adapter is provided, including: a connection pipe inserted into a body of a device; a receiving part disposed on an outer surface of the connection pipe; a clamp member integrally formed with the receiving part and resiliently fitted into the body of the device to secure the connection pipe; and a resilient member disposed inside the receiving part to support the clamp member.

The resilient member may be coupled to a fitting protrusion formed on the connection pipe inside the receiving part.

The resilient member may include a leaf spring.

The receiving part may be formed with a latch jaw to prevent the clamp member from being deviated outside the receiving part.

The clamp member may be formed with a latch protrusion caught by the latch jaw inside the receiving part.

The resilient member may support the clamp member in an outward direction of the receiving part.

In accordance with another aspect of the present invention, a vacuum cleaner having a hose adapter is provided, the hose adapter including: a connection pipe inserted into a body of the vacuum cleaner; a receiving part disposed on an outer surface of the connection pipe; a clamp member integrally formed with the receiving part and resiliently fitted into the body of the vacuum cleaner to secure the connection pipe; and a resilient member disposed inside the receiving part to support the clamp member.

The resilient member may be coupled to a fitting protrusion formed on the connection pipe inside the receiving part.

The resilient member may include a leaf spring.

The receiving part may be formed with a latch jaw to prevent the clamp member from being deviated outside the receiving part.

The clamp member may be formed with a latch protrusion caught by the latch jaw inside the receiving part.

The resilient member may support the clamp member in an outward direction of the receiving part.

### BRIEF DESCRIPTION OF THE DRAWINGS

The above and other features and advantages of the present invention will become apparent from the following description of exemplary embodiments given in conjunction with the accompanying drawings, in which:
Fig. 1 is a perspective view of a conventional vacuum cleaner;
Fig. 2 is an exploded perspective view of a conventional hose adapter for the vacuum cleaner;
Fig. 3 is a perspective view of a hose adapter according to one embodiment of the present invention;
Fig. 4 is a partially cut-away perspective view of the hose adapter shown in Fig. 3;
Fig. 5 is a cross-sectional view taken along line V-V in Fig. 3; and
Fig. 6 is a side view of a hose adapter according to another embodiment of the present invention.

### DETAILED DESCRIPTION OF THE INVENTION

Exemplary embodiments of the present invention will be described in detail with reference to the accompanying drawings hereinafter. For convenience of description, a hose adapter applicable to a vacuum cleaner will be described by way of illustration. Here, it should be noted that the drawings are not to precise scale and may be exaggerated in thickness of lines or size of components for descriptive convenience and clarity only.

Furthermore, terms used herein are defined by taking functions of the present invention into account and can be changed according to the custom or intention of users or operators. Therefore, definition of the terms should be made according to overall disclosures set forth herein.

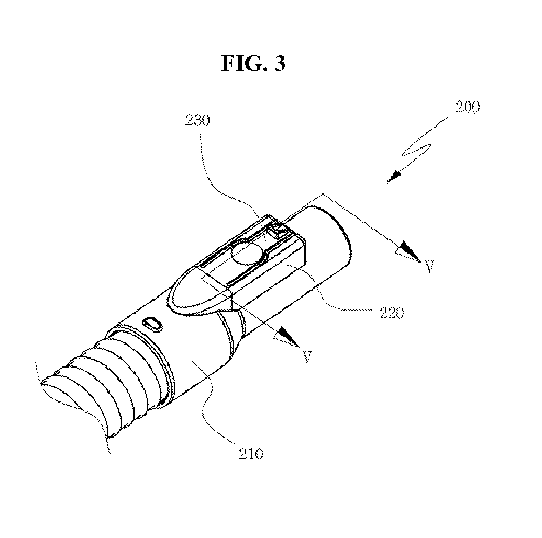

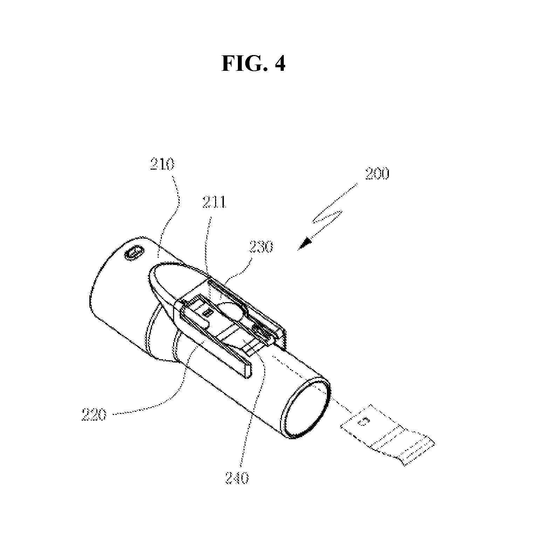

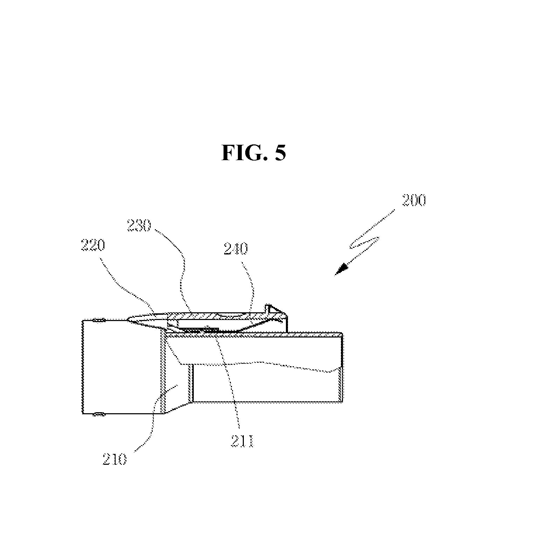

Fig. 3 is a perspective view of a hose adapter according to one embodiment of the present invention, Fig. 4 is a partially cut-away perspective view of the hose adapter shown in Fig. 3, and Fig. 5 is a cross-sectional view taken along line V-V in Fig. 3.

Referring to Figs. 3 and 4, the hose adapter 200 according to this embodiment includes a connection pipe 210, a receiving part 220, a clamp member 230, and a resilient member 240.

The connection pipe 210 is inserted into a socket 140 (see Fig. 2) of a body 110 (see Fig. 2) of a device, for example, a vacuum cleaner, may be formed of a plastic material, and may have a cylindrical hollow shape.

The receiving part 220 protrudes from an outer surface of the connection pipe 210. The receiving part 220 may protrude, for example, upward from the outer surface of the connection pipe 210. Here, the receiving part 220 is open at an upper side and at one side.

The receiving part 220 may be integrally formed with the connection pipe 210 and may be formed of a plastic material. Here, the one side of the receiving part 220 refers to a side of the receiving part 220 which will be inserted into the body 110 of the vacuum cleaner, and the other side of the receiving part 220 described below refers to a side opposite the one side of the receiving part 220.

The clamp member 230 is integrally formed with the receiving part 220. Specifically, the clamp member 230 is connected at one end thereof to the other side of the receiving part 220 so that the clamp member 230 can be integrally formed with the receiving part 220 so as to extend from the other side of the receiving part 220. The clamp member 230 may be connected at the one end to an upper end of the other side of the receiving part 220 to define a predetermined space inside the receiving part 220.

The clamp member 230 may be formed of an elastic material to move up or down with the one end of the clamp member 230 secured to the receiving part 220. As such, since the clamp member 230 has elasticity to move up or down, the hose adapter can be resiliently fitted into the socket 140 of the body 110 of the vacuum cleaner.

With this configuration, the clamp member 230 can be resiliently fitted into a latch groove 142 (see Fig. 2) of the socket 140 to maintain an inserted state of the connection pipe 210 after the connection pipe 210 is inserted into the socket 140 of the body 110 by a user.

Further, when the clamp member 230 is pressed and released from the socket 140 of the body 110 by the user, the connection pipe 210 can be separated from the body 110. In other words, the connection pipe 210 can be selectively connected to or disconnected from the body 110. The clamp member 230 may be integrally formed with the receiving part 220, and may be made of a plastic material.

As described above, the hose adapter 200 of this embodiment has the receiving part 220 and the clamp member 230 integrally formed with the connection pipe 210 to realize integration of plural components, thereby allowing more convenient attachment and detachment of the hose adapter to the body while simplifying configurations of the components and an assembly structure, as compared to a conventional hose adapter in which a plurality of components are separately provided.

Accordingly, the hose adapter 200 of this embodiment enables easy assembly on an assembly line and reduction in manufacturing costs.

Meanwhile, the resilient member 240 may be disposed inside the receiving part 220, specifically, between the connection pipe 210 and the clamp member 230. As such, the resilient member 240 is disposed between the connection pipe 210 and the clamp member 230, so that the clamp member 230 can be supported in the outward direction of the receiving part 220. For example, the resilient member 240 supports a lower surface of the clamp member 230 in an upper direction.

The resilient member 240 is preferably a leaf spring made of a metallic material. The resilient member 240 is inserted into the receiving part 220 through the open side of the receiving part 220 and is fitted onto a fitting protrusion 211, which is formed on the connection pipe 210, so that the resilient member 240 can be secured inside the receiving part 220.

The resilient member 240 supports the clamp member 230 upward to increase elasticity of the clamp member 230, thereby preventing the clamp member 230 from being unintentionally detached from the body 110 of the vacuum cleaner.

In particular, since the clamp member 230 is made of the plastic material, the repetitious use of the hose adapter results in a gradual decrease in elasticity of the clamp member 230, which causes a sinking phenomenon of the hose adapter. However, according to this embodiment, the resilient member 240 invariably supports the clamp member 230, ensuring an extended service life of the hose adapter 230. In other words, the hose adapter 200 of this embodiment is not unintentionally separated from the body 110 of the vacuum cleaner even after repeated use thereof.

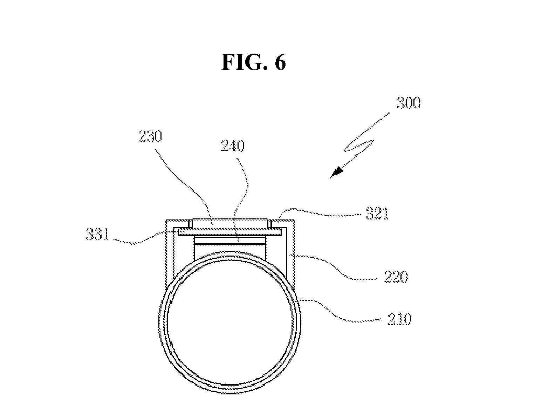

Fig. 6 is a side view of a hose adapter according to another embodiment of the present invention.

In this embodiment, the same reference numerals as those of the above embodiment will indicate the same components, and a detailed description thereof will be omitted.

Referring to Fig. 6, in a hose adapter 300 according to this embodiment, a latch jaw 321 is formed on a receiving part 220, and a latch protrusion 331 is formed on a clamp member 230.

Specifically, the latch jaw 321 may protrude from an upper side of the receiving part 220 toward the clamp member 230 to be substantially collinear with the clamp member 230. The latch jaw 321 is disposed adjacent either side of the clamp member 230.

Corresponding to the latch jaw 321, the clamp member 230 is formed with the latch protrusion 331 at either side of the clamp member 230 adjacent the latch jaw 321. The latch protrusion 331 protrudes from either side of the clamp member 230 to be caught by a lower portion of the latch jaw 321 when the clamp member 230 is raised a predetermined distance or more, thereby preventing the clamp member 230 from being deviated outward from the receiving part 220 through the upper side of the receiving part 220.

The clamp member 230 is supported in the outward direction of the receiving part 220 by the resilient member 240. Thus, if a supporting force of the resilient member 240 is excessively high, the clamp member 230 can be deviated outward from the receiving part 220.

For the hose adapter 300 according to this embodiment, when raised a predetermined distance or more, the clamp member 230 is caught inside the receiving part 220 by means of the latch protrusion 331 and the latch jaw 321, and is thus prevented from being deviated outside the receiving part 220. Therefore, the hose adapter 300 of this embodiment can be connected to the body of the device through easy coupling between the clamp member 230 and the socket 140 while preventing damage of the clamp member 230.

As apparent from the above description, the hose adapter of the present invention has a clamp member and a receiving part integrally formed with a connection pipe to realize integration of plural components, thereby allowing more convenient attachment and detachment of the hose adapter to a body of a device such as a vacuum cleaner, as compared to the conventional hose adapter in which a plurality of components are separately provided.

Hence, the present invention simplifies configurations of components and an assembly structure while enabling easy assembly on an assembly line and reduction in manufacturing costs.

Further, the hose adapter has a resilient member for supporting the clamp member in the upward direction to improve elasticity of the clamp member and is thus prevented from being unintentionally separated from the body of the device even after repeated use thereof.

Moreover, when raised a predetermined distance or more, the clamp member of the hose adapter is caught by means of a latch protrusion and a latch jaw, and is thus prevented from being deviated outside the receiving part. Therefore, the hose adapter can be connected to the body of the device through easy coupling between the clamp member and the socket while preventing damage of the clamp member.

Although the present invention has been described with reference to the embodiments and the accompanying drawings, the embodiments are given by way of illustration and it will be apparent to those skilled in the art that various modifications and equivalent embodiments can be made without departing from the spirit and scope of the present invention.

Further, the description of the hose adapter for the vacuum cleaner as provided herein is only one example, and the present invention can be applied to other devices. Accordingly, the technical scope of the present invention should be limited only by the accompanying claims.

## Claims

1. A hose adapter comprising:
a connection pipe inserted into a body of a device;
a receiving part disposed on an outer surface of the connection pipe;
a clamp member integrally formed with the receiving part and resiliently fitted into the body of the device to secure the connection pipe; and
a resilient member disposed inside the receiving part to support the clamp member.

2. The hose adapter according to claim 1, wherein the resilient member is coupled to a fitting protrusion formed on the connection pipe inside the receiving part.

3. The hose adapter according to claim 1, wherein the resilient member comprises a leaf spring.

4. The hose adapter according to claim 1, wherein the receiving part is formed with a latch jaw to prevent the clamp member from being deviated outside the receiving part.

5. The hose adapter according to claim 4, wherein the clamp member is formed with a latch protrusion caught by the latch jaw inside the receiving part.

6. The hose adapter according claim 1, wherein the resilient member supports the clamp member in an outward direction of the receiving part.

7. A vacuum cleaner having a hose adapter, the hose adapter comprising:
a connection pipe inserted into a body of the vacuum cleaner;
a receiving part disposed on an outer surface of the connection pipe;
a clamp member integrally formed with the receiving part and resiliently fitted into the body of the vacuum cleaner to secure the connection pipe; and
a resilient member disposed inside the receiving part to support the clamp member.

8. The vacuum cleaner according to claim 7, wherein the resilient member is coupled to a fitting protrusion formed on the connection pipe inside the receiving part.

9. The vacuum cleaner according to claim 7, wherein the resilient member comprises a leaf spring.

10. The vacuum cleaner according to claim 7, wherein the receiving part is formed with a latch jaw to prevent the clamp member from being deviated outside the receiving part.

11. The vacuum cleaner according to claim 10, wherein the clamp member is formed with a latch protrusion caught by the latch jaw inside the receiving part.

12. The vacuum cleaner according to claim 7, wherein the resilient member supports the clamp member in an outward direction of the receiving part.
